# EUROPEAN PATENT SPECIFICATION

(11) **EP 1 909 350 B1**
(45) Date of publication and mention of the grant of the patent: **08.12.2010**
(21) Application number: 06425682.9
(22) Date of filing: 06.10.2006
(51) Int. Cl.: H01M 8/06, H01M 8/10

(54) **Micro fuel cell system fed with hydrogen produced by decomposition of sodium borohydride in a microreactor**
Wasserstoffgespeiste Mikro-Borhydrid-Brennstoffzelle mit Wasserstoff, der aus Natriumborhydrid in einem Microreaktor gewonnen wird
Micropile à combustible alimentée avec de l'hydrogène provenant de la décomposition de borohydrure de sodium dans un microréacteur

(43) Date of publication of application: 09.04.2008
(73) Proprietor: STMicroelectronics Srl, 20041 Agrate Brianza (MB) (IT)
(72) Inventor: Giuffrida, Roberta, 95040 S. G. Galermo (Catania) (IT); Spoto, Giuseppe Emanuele, 95039 Trecastagni (Catania) (IT); Zito, Roberta, 70026 Modugno (Bari) (IT)
(74) Representative: Ferrari, Barbara

(56) References cited:
- WO-A-03/002247
- WO-A-03/018468
- WO-A-03/041187
- WO-A-2005/050763
- WO-A-2006/116638
- WO-A2-02/19452
- US-A1- 2003 103 878
- US-A1- 2004 076 861
- US-A1- 2004 179 980
- US-A1- 2005 074 643
- US-A1- 2005 266 281
- S.C. KELLEY, G.A. DELUGA, W.H. SMYRL: "Miniature Fuel Cells Fabricated on Silicon Substrates" AICHE JOURNAL, vol. 48, no. 5, 2002, pages 1071-1082, XP002421378
- S.V. KARNIK, M.K. HATALIS, M.V. KOTHARE: "Towards a Palladium Micro-Membrane for the Water Gas Shift Reaction: Microfabrication Approach and Hydrogen Purification Results" JOURNAL OF MICROELECTROMECHANICAL SYSTEMS, vol. 12, no. 1, 2003, pages 93-100, XP002421379
- KELLEY S C ET AL: "A MINIATURE METHANOL/AIR POLYMER ELECTROLYTE FUEL CELL" ELECTROCHEMICAL AND SOLID-STATE LETTERS, IEEE SERVICE CENTER, PISCATAWAY, NJ, US, vol. 3, no. 9, September 2000 (2000-09), pages 407-409, XP001023907 ISSN: 1099-0062
- A.V. PATTEKAR, M.V. KOTHARE: "A Microreactor for Hydrogen Production in Micro Feul Cell Applications" JOURNAL OF MICROELECTROMECHANICAL SYSTEMS, vol. 13, no. 1, 2004, pages 7-18, XP002421380

## Description

### Field of application

In its most general aspect, the present invention relates to the industrial field of micro fuel cells, supplied with hydrogen, for generating electric energy, particularly but not exclusively intended for the operation of portable electronic devices.

In particular, the present invention relates to an integrated system for the production of energy of the type comprising at least one micro fuel cell and one microreactor for producing gaseous hydrogen to be supplied to said micro cell.

### Prior art

It is known that the growing demand for electric energy to supply portable electronic devices has determined an intense, strong interest of the field experts towards the identification, design and realisation of new electric energy sources, in addition to and overcoming the traditional batteries that have been used so far for the above purpose, for example lithium ions batteries.

And it is known that, among the new portable electric energy sources, a great interest has been aroused by miniaturised fuel cells, hereafter indicated as micro cells, i.e. those devices capable of obtaining electric energy from an appropriate fuel, for example through oxidation-reduction reactions.

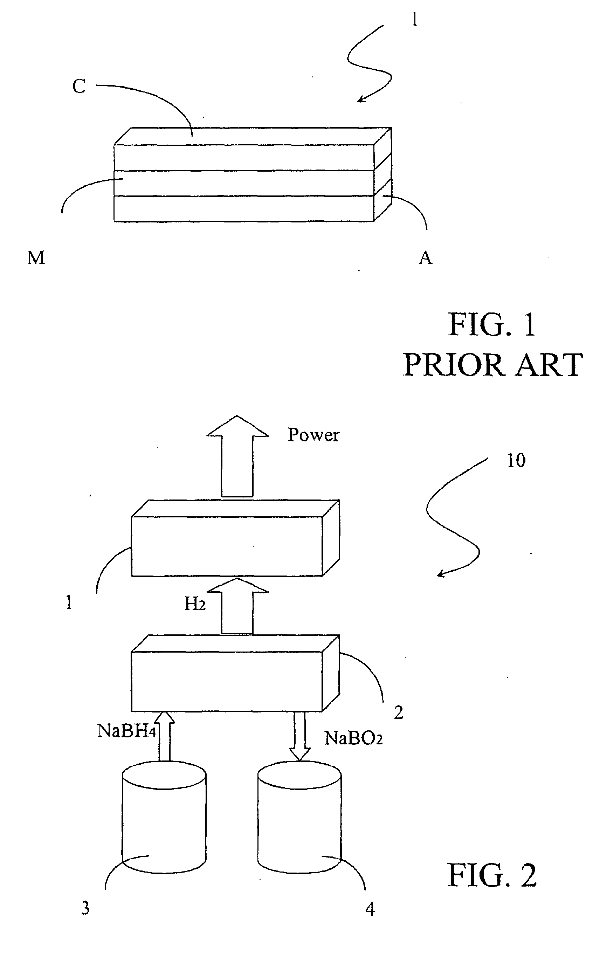

A micro fuel cell of the known type is schematically shown in Figure 1, globally indicated with 1. In particular, the micro fuel cell shown is of the polymeric solid electrolyte type [Proton Exchange Membrane Fuel Cells].

Such a micro fuel cell 1 essentially comprises two electrodes, an anode A and a cathode C, separated by an electrolyte, which, in the case considered, instead of being liquid, is solid and constituted by a thin polymeric membrane, which allows the passage of only the protons H+ from the anode A to the cathode C (PEM membrane or "Proton Exchange Membrane").

In particular, the use of Membrane Electrode Assembly (MEA) of the type shown in Figure 1, suitably enclosed like a sandwich between the anode A and the cathode C to realise the micro fuel cell 1 is well known as advantageous.

In substance, micro fuel cells essentially are energy converters which, by exploiting the energetic content of a chemical fuel, for example through an oxidation-reduction reaction, allow to produce electric energy in a reversible way, supplying collateral reaction products, in particular heat and water.

It is also known that, from some time, the attention of the researchers of this industrial field is aimed at the identification of fuels which, suitably treated in respective micro cells, allow an easy, clean obtainment of electric energy, with high performances.

At present, hydrogen and methanol are the preferred fuels for the treatment in micro cells of the type considered, in particular of the polymeric solid electrolyte type.

The density of the power generated by these micro fuel cells, main requisite in portable applications, is strongly influenced by the type of fuel used.

It has been proved that this density of energy obtainable from a micro fuel cell supplied with hydrogen is, under the same conditions, greater for some orders of magnitude than the one obtainable from a similar micro cell supplied with methanol. The hydrogen is thus *prima facie* the fuel to be used for micro fuel cells which are requested a high power density, as in the case of portable applications.

In particular, in a micro hydrogen cell 1, the anode A is supplied with gaseous hydrogen (pure) and thus, by means of a catalyst (usually platinum), is separated into protons and electrons. At this point, while the protons migrate towards the cathode C through a polymeric membrane M, the electrons, which cannot cross this membrane, reach the cathode C passing through an external circuit (not shown for sake of simplicity), generating an electric current. The cathode C is also reached by oxygen (which can be that contained in the air) and here it is recombined, always with the help of a catalyst (also usually platinum), with the protons coming from the polymeric membrane M and with the electrons coming from the external circuit, forming water.

But it is also proved that for obtaining, from a micro hydrogen cell, amounts of electric energy sufficient for a satisfying, prolonged operation of a respective portable device, in particular amounts of energy sufficient to justify a gradual substitution of the batteries currently used as portable energetic sources, it is necessary that said micro cell has a considerable "storage" of hydrogen.

To the above purpose, taking into account the production techniques of hydrogen adopted so far, the very reduced dimensions of the electronic devices taken into consideration, as those of the micro fuel cells associated with said devices, the above need can be met by using small tanks (cylinders) wherein the hydrogen is stored at the gaseous state under very high pressures, or even liquefied at very low temperatures.

Known technical solutions to store hydrogen provide to compress hydrogen in the gaseous state under high pressure, for example of 200-350 bar at a temperature of 20°C. It is also known to store hydrogen in the liquid form at very low temperatures, for example equal to -253°C for a pressure of one bar.

The operative conditions (of temperature and pressure) for the storage of hydrogen in the liquid and gaseous form realised according to the prior art can be summarised in the following table:

| **Storage system** | **Temperature (°C)** | **Pressure (bar)** |
|---|---|---|
| liquid H₂ | -253 | 1 |
| compressed H₂ | 20 | 200 - 350 |

Besides the known high dangerousness of the different manipulations to which the hydrogen is to be subjected to be stored in small tanks under the above conditions, other drawbacks of the prior art are constituted exactly in that these manipulations must be carried out between the step of hydrogen production and that of its transformation into electric energy, involving respective methodologies, apparatuses and devices of difficult management and control. Moreover, as regards the hydrogen liquefaction it is known that it implies a total loss of energy equal to 30% since to maintain the hydrogen in the liquid form it is necessary to preserve it at a temperature of -253°C. Moreover, for the conversion of the hydrogen into the liquid form it is necessary to use cryogenic containers that, besides being expensive instruments, require a reduction of the losses of fuel due to evaporation to the minimum.

For these reasons, the use of hydrogen as energetic vehicle in portable commercial systems has not met yet that great, advantageous diffusion that its potentiality would suggest.

A known solution is disclosed in WO 2005/050763A (Arizona Board of Regent (US)) that relates to a system and a method for generating and separating gaseous fuel components in particular for portable energy applications. The microreactor and the micro fuel cell have different dimensions and they are not superimposed.

Moreover, the patent application No. US 2003/103878A1 to Morse et al. discloses a chemical microreactor that provides means to generate hydrogen fuel from liquid sources such as ammonia, methanol, and butane through steam reforming processes when mixed with an appropriate amount of water. Moreover, according to this document, the microreactor and the micro fuel cell are not superimposed nor have the same dimensions and in addition the microreactor is based on reforming processes.

International Patent Application No. WO 02/19452 describes a fuel processor and integrated fuel cell including a monolithic three-dimensional multilayer ceramic carrier structure defining a fuel reformer and including an integrated fuel cell stack. This document also relates to reforming processes and it is not based on micromachined components.

US Patent Application No. US 2004/0179980 (Pattekar et al.) describes a microreactor consisting of a network of catalyst-packed parallel microchannels with a catalyst particle filter near the outlet fabricated by micromachines technique. This microreactor uses methanol as fuel solution.

International Patent Application No. WO 2006/116638A2 relates to a fuel cell apparatus including a housing as an isothermal zone which integrates an in-plane fuel cell stack and a tail gas burner with the isothermal zone. The fuel cell and the tail gas burner are in thermal communication and share a common wall. The housing integrates also a fuel reformer in thermal communication with the fuel cell. The fuel cell is preferably a solid oxide fuel cell, which does not work at environment temperature but needs very high temperature for correctly working.

The technical problem underlying the present invention is that of providing an integrated system for the production of energy using micro fuel cells, having functional and structural features that allow to overcome the drawbacks cited with reference to the prior art, reducing, in a substantial way, all the operative steps required thereby between the production of hydrogen and its transformation into electric energy as well as the overall dimensions of the system.

### Summary of the invention

This problem is solved, according to the present invention, by an integrated system for the production of energy of the type comprising at least one micro fuel cell and a microreactor for the production of gaseous hydrogen to be supplied to said micro cell.

Advantageously according to the invention, the micro fuel cell and the microreactor are realised by using micro-worked silicon plates having identical dimensions and being connected to each other by means of wafer bonding technique so as that the microreactor is integrated with the micro fuel cell. Advantageously, the microreactor is supplied with a fuel aqueous solution of Sodium Borohydride at environment temperature and pressure.

The problem is also solved by a process for the production of energy using this integrated system.

The features and advantages of the integrated system and of the method for producing electric energy according to the present invention will be apparent from the following description given with reference to the annexed drawings, given by way of indicative and non limiting example.

### Brief description of the drawings

In the drawings:
Figure 1 is a block scheme schematically showing a micro fuel cell realised according to the prior art;
Figure 2 is a block scheme schematically showing an integrated system for the production of energy according to the present invention;
Figure 3 shows an axonometric view of a microreactor composing the system of Figure 2;
Figure 4 shows the pattern vs time of a flow of energy obtained with the microreactor of Figure 3 when its operation conditions vary;
Figure 5 shows an axonometric, exploded view of the integrated system according to the present invention; and
Figure 6 shows a further enlarged, section view of the integrated system of Figure 5.

### Detailed description

With reference to the block scheme of Figure 2, an integrated system for the production of energy according to the present invention is described, intended for the supply of a generic portable eleuLrUarnic device, not shown.

In particular, the integrated system 10 for the production of energy comprises a micro fuel cell 1 and a microreactor 2 for the production of hydrogen (H₂) to be supplied to said micro fuel cell 1, which takes care, in a known way, of its transformation into electric energy, indicated with Power in Figure 2.

The integrated system 10 for the production of energy also comprises a first tank 3 for storing a fuel solutions and a second tank 4 collecting the non reacted solution and the reaction by-products, suitably in fluid communication with the microreactor 2.

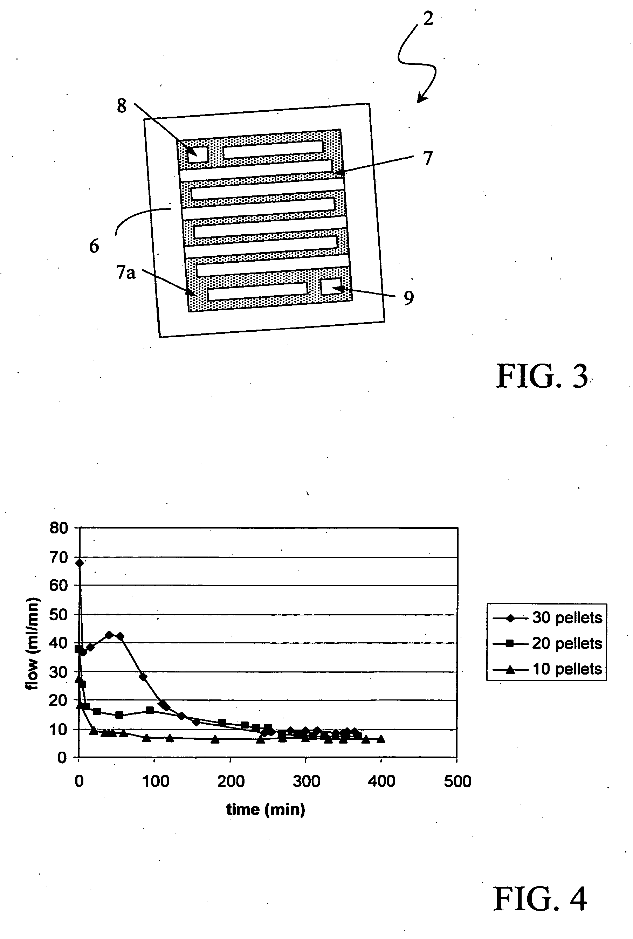

With reference to Figures 3, 5 and 6, the body of the microreactor 2 is essentially constituted by a plate 6, in particular a silicon plate, of predetermined thickness, wherein, with known techniques hereafter explained, a reaction chamber 7a is formed.

According to a preferred embodiment of the invention, this reaction chamber 7a is in turn constituted by a microchannel 7, made in the thickness of said plate 6 and substantially serpentine-wise extended; two through holes, 8 and 9, are open on the bottom of said microchannel 7, in correspondence with respective opposite ends thereof. A semi-permeable membrane 5 (permeable to gases and impermeable to liquids) is fixed, with known techniques, on said plate 6, in juxtaposition to the wall thereof whereon said microchannel 7 is open. In particular, the membrane 5 is made integral with the plate 6 thanks to the use of an adhesive layer formed, for example, by silicon resins.

In substance, the integrated system 10 for the production of energy comprises the micro fuel cell 1 and the microreactor 2, both formed by silicon plates having the same dimensions. Advantageously according to the invention, these plates are micro-worked, in particular through the MEMS technology, and connected to each other by means of the wafer bonding technique. The layout of these plates requires through holes, obtained by means of a double etching (etching both side), which allow the passage of the hydrogen produced by the microreactor 2 to the anode A of the micro fuel cell 1 and of the air to the cathode C of the same.

Further advantageously according to the invention, the microchannel 7 in the microreactor 2 is also realised with the MEMS technology.

It is suitable to underline that the microreactor 2 for the production of hydrogen to be supplied to the anode A of the micro fuel cell 1 is integrated with the micro cell itself.

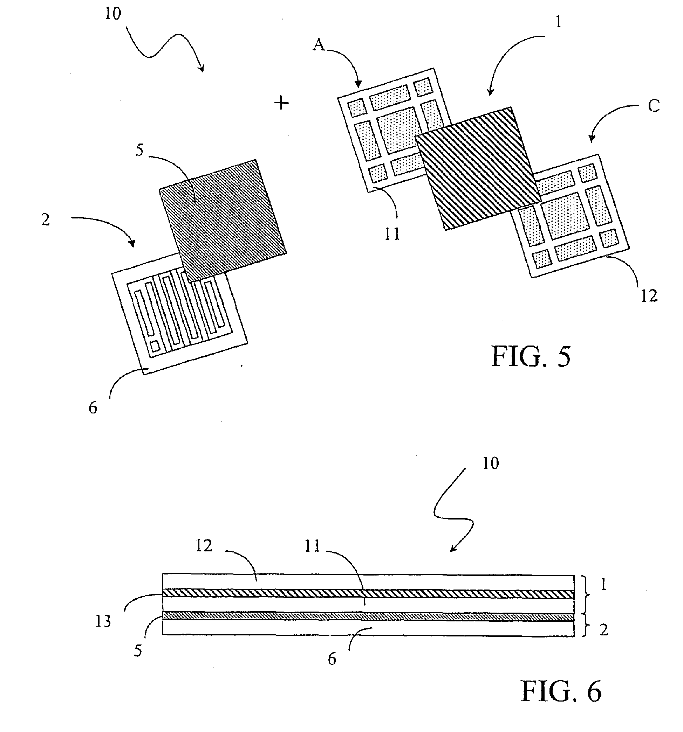

Advantageously according to the invention, the micro fuel cell 1 also comprises a membrane 13 pressed inside two silicon plates, 11 and 12, micro-worked, in particular realised with the MEMS technology (Micro-electro-mechanical system), suitable to form the anode A and the cathode C of the micro cell, as shown in Figures 5 and 6.

Moreover, a suitable catalyst constituted by at least one metal of the group VIIIB of the periodic table of the elements, in particular a metal chosen among Cobalt, Nickel, Platinum, Ruthenium, preferably Platinum, is placed on the membrane 13 for allowing the reaction of the gaseous hydrogen produced by the microreactor 2 and its transformation into ions H+.

In particular, as it will be better clarified hereafter in the description, once activated, the microreactor 2 develops hydrogen, which, through the membrane 5 - separating the gas from the liquid - suitably connected thereto, reaches the anode A of the micro fuel cell 1. When the hydrogen passes through holes of the silicon plate 11 which realises the anode A of the micro fuel cell 1, it meets the membrane 13 where it reacts, thanks to the presence of the catalyst placed thereon, to give electrons and ions H+.

These ions H+, transiting through the membrane 5, reach the cathode C of the micro fuel cell 1, where, together with the oxygen in the air and acceding the micro cell through the silicon plate 1.2 which realises this cathode C react to form water and develop heat.

The electrons instead, through an external electric circuit connected to the integrated system 10 for the production of energy, constitute the current supplied by the micro fuel cell 1 and complete the reaction at the cathode C where, rejoining the ions H+, reconstitute the hydrogen atoms, before these react with the oxygen to form water.

According to a further preferred embodiment of the invention, a continuous flow of an aqueous solution of Sodium Borohydride (NaBH₄), stored at environment temperature and pressure in the first tank 3, is supplied to the reaction chamber of the microreactor 2. In this way, the microreactor 2 realises the continuous production of gaseous hydrogen to be supplied to the micro fuel cell 1.

Advantageously, to make this aqueous solution non inflammable and stable in the air, it is buffered at a pH comprised between 13 and 14, preferably at pH 14, through an aqueous solution of Sodium hydroxide (NaOH), at 4% by weight.

In the reaction chamber of this microreactor 2, the above aqueous solution of Sodium Borohydride (NaBH₄) comes into contact, for an appropriate and predetermined residence time, with a catalytic bed formed by a metal of the group VIIIB of the elements periodic table, in particular a metal chosen among Co, Ni, Pt and Ru. Preferably, the catalyst used is Ruthenium in the pulverulent form, finely dispersed in the respective catalytic bed. Further preferably, the Ruthenium is deposited with PVD techniques (Phase Vapour Deposition) or through sputtering.

As from it comes into contact with this catalyst, from the aqueous solution of Sodium Borohydride (NaBH₄) gaseous hydrogen is freed, according to the reaction:

NaBH₄ + H₂O → -4 H₂ + NaBO₂

It is, in particular, an exothermal reaction, which spontaneously takes place at a temperature equal to 25°C.

While the solution of non reacted Sodium Borohydride (NaBH₄) and the by-product Sodium metaborate (NaBO₂) continuously discharged from the microreactor 2 are sent to the second collection tank 4, the hydrogen (H₂) generated by the above catalytic reaction, is sent as it is, at environment temperature and pressure, to the micro fuel cell 1.

It is to be underlined that from the above indicated reaction, it occurs that from 1 mole of Sodium Borohydride (NaBH₄) 4 moles of hydrogen (H₂) are obtained, therefore, advantageously according to the invention, by using Sodium Borohydride (NaBH₄) as fuel solution good percentages nf hydrogen are produced in a stable way.

In particular, from 1 litre of NaBH₄ solution by 30 wt%, stabilised with NaOH by 4wt%, Ruthenium being present as catalyst 8, about 66gr of liquid hydrogen are obtained, equivalent to 789 litres of gaseous hydrogen (equal to 7 wt% of hydrogen).

To verify the flow of hydrogen produced from a solution of Sodium Borohydride, the ruthenium catalyst being present, experimental tests have been carried out by using a macroreactor containing an alkaline solution of NaBH4, there being an amount of catalyst in the form of pellets of Ruthenium (Ru on Al2O3 in the amount of 0.5% by weight).

The results of these experimental tests arc shown in Figure 4 where the flow is reported of hydrogen produced as a function of the time when the number of pellets and thus the amount of catalyst varies.

As it is understood from this Figure, the hydrogen flow, increasing the number of pellets from 10 to 20 up to 30, is under steady conditions (after about 3 hours from the start of the hydrogen production reaction) respectively about 6.5, 7.3, 8.5 ml/mn.

Further advantageously, the Sodium metaborate (NaBO₂), which is obtained as by-product of the reaction, is soluble in water, is not polluting and, thanks to the membrane 5 separating the gas from the liquid interposed between the microreactor 2 and the anode A of the micro fuel cell 1, does not reach this latter. The single product, besides hydrogen, which grows and reaches the anode A of the micro fuel cell 1 is thus the aqueous vapour, suitably usable for wetting the solid electrolyte of the membrane 13 of the micro fuel cell 1.

The advantages of the use of the aqueous solution of Sodium Borohydride (NaBH₄) as fuel solution are all in all evident. In particular:
- Great availability of the starting material, of easy preparation and of as much easy manipulation;
- High performance of the catalytic reaction in the microreactor, whose completion does not imply dangerousness and does not require particular and difficult controls or regulation interventions;
- Production of hydrogen at environment temperature and pressure and consequent possibility of supplying it as product to the micro fuel cell;
- Continuity of the hydrogen production;
- Control of the production through simple regulation of the delivery of the supply of aqueous solution of Sodium Borohydride (NaBH₄) to the microreactor and through variations of the residence time in contact with the catalyst and appropriate variations of the amount of catalyst used;
- Obtainment of a by-product, Sodium metaborate (NaBO₂), nontoxic, of easy manipulation, soluble in water and possibly usable for the obtainment of Sodium Borohydride (NaBH₄).

Advantageously, the membrane 5 covering the reaction chamber realised by the microchannel 7 ensures the correct operation of the microreactor 2 in any position and orientation, not allowing an undesired leak of the fuel solution of Sodium Borohydride (NaBH₁),

As already said, a catalyst of appropriate granulometry, preferably Ruthenium, is deposited on the bottom, inside the serpentine-like microchannel 7, so as to form a catalytic bed therein.

In a preferred embodiment of the invention, the catalyst is suitably deposited on the bottom of the microchannel 7 of the microreactor 2 by using sputtering or PVD (Phase Vapour Deposition) techniques.

The serpentine-like microchannel 7 which, as said, constitutes the reaction chamber of the microreactor 2 of the present invention, is in fluid communication with the first tank 3 storing the aqueous solution of Sodium Borohydride (NaBH₄) and with the second tank 4 collecting the by-products of the reaction.

In a preferred embodiment of the invention, the plate-like body 6 of the microreactor 2 is micro-worked with the MEMS technology (Micro-electro-mechanical system), the microchannel 7 being trenched by micro-machines removing portions of the plate-like body 6 realised by means of a semiconductor substrate, as shown in Figure 3.

In a preferred embodiment of the invention, this removal of portions is realised with a photolithographic process using photolithographic masks "in negative" with respect to the portions to be removed. In particular, these photolithographic masks are realised so as to leave the portions to be removed uncovered, protecting the rest of the semiconductor substrate realising the plate-like body 6 from a successive anisotropic chemical etching step used to remove these portions. The anisotropic chemical etching step is for example realised in wet with Potassium hydroxide (KOH).

Advantageously, the catalyst is deposited on the bottom of the serpentine-like microchannel 7 through sputtering or PVD (Phase Vapour Deposition) techniques using a shadow mask for protecting arcas of the microreactor 2 which do not have to be tracked by the solution of Sodium Borohydride (NaBH₄) or fuel solution. In this way the catalyst, which represents the most expensive component of the microreactor 2, is deposited only on one portion of a bottom wall of the reaction chamber realised by the microchannel 7. In a preferred embodiment of the invention, the catalyst is Ruthenium deposited on the bottom of the microchannel 7 of the microreactor 1 by using sputtering or PVD techniques (Phase Vapour Deposition) from a target or precursor of solid Ruthenium, thus realising a deposited solid catalytic layer.

As already highlighted, by introducing the solution of Sodium Borohydride (NaBH₄) into the reaction chamber, i.e. into the microchannel 7, hydrogen (II₂) and Sodium metaborate (NaBO₂) are produced.

Advantageously according to the invention, as above explained, the production of hydrogen occurs as soon as the solution of Sodium Borohydride (NaBH₄) comes into contact with the catalyst in the reaction chamber formed by the microchannel 7.

Suitably, the tanks 3, 4 are equipped with mechanical valves, for example constituted by suspended diaphragms, and are automatically opened thanks to the pressure exerted for the installation of the same tanks 3, 4 on a support platform of the integrated system 10 for the production of energy.

Further advantageously according to the invention, for prevent the corrosive action exerted by the aqueous solution of Sodium Borohydride (NaBH₄) and Sodium hydroxide (NaOH) on the silicon substrate where the reaction chamber is realised, the microchannel 7, in particular the bottom thereof, is protected with an oxide layer, in particular silicon oxide (SiO₂).

In this way, the correct operation of the microchannel 7 and thus of the integrated system 10 for the production of energy according to the invention are also ensured for long periods of time.

In particular, this oxide layer is deposited by means of a thermal process and, above it, the catalyst (Ruthenium) is then deposited through physical deposition techniques in vapour phase (PVD), as above indicated.

In conclusion, the microreactor 2 of the integrated system 10 for the production of energy according to the invention carries out the continuous production of hydrogen by means of reaction of a solution of Sodium Borohydride (NaBH₄), this production of hydrogen advantageously occurring at environment temperature and pressure thanks to the use of a suitable catalyst.

Advantageously, the catalyst is deposited on the bottom of a serpentine-like microchannel of a reaction chamber of the microreactor, in particular by using sputtering techniques.

The integrated system 10 for the production of energy according to the invention comprises a microreactor and further micro components for the control and the modulation of the hydrogen production, resulting advantageously independent from the orientation of use, thanks to the insertion of a semipermeable membrane between the reaction chamber and the output conduit of the hydrogen in the microreactor.

All the components of the integrated system 10 for the production of energy according to the invention, except for the tanks, can be realised by using the micro-working techniques developed for the manufacturing of integrated circuits, which allow to obtain a high dimensional control and very high working precision, typical of the photolithographic processes. Therefore, this system can be manufactured in an industrial way and at low cost.

In conclusion, the proposed integrated system for the production of energy solves the problems highlighted in relation to the prior art and further shows the following advantages:
- The catalytic electrochemical reaction managing the hydrogen production can be controlled through the amount of catalyst used in the reaction chamber of the microreactor;
- The microreactor does not need energy to produce hydrogen, operates at environment temperature and atmospheric pressure and produces hydrogen only according to the requests;
- The microreactor and all its components can be miniaturised, allowing to realise a source of portable energy;
- The catalytic reaction of an aqueous solution of Sodium Borohydride (NaBH₄) is a more economic method for producing hydrogen with respect to the methods used in the prior art and does not produce acid compounds or caustic vapours as it occurs in other production systems, for example by using solutions comprising Ca/water and Zn/acid;
- The hydrogen is the only gas produced and therefore there is no consume nor degradation or the so called "poisoning" of the catalyst, caused for example by reactions producing carbon dioxide (CO₂) as in the case of methanol-supplied systems;
- If the system is heated, the water vapours produced by the electrochemical reaction realised therein are mixed with the produced hydrogen, which is highly desirable for a micro fuel cell system since the vapours of water, wetting the hydrogen flow, improve the performances of the membrane (thanks to a decrease of the internal resistance);
- The reaction speed is constant and thus allows to have hydrogen produced in a stable way for a period of time,
- The system can be used as energetic source in portable electronic devices.

## Claims

1. Integrated system for the production of energy of the type comprising at least one micro fuel cell (1) and a microreactor (2) for the production of gaseous hydrogen to be supplied to said micro fuel cell (1), wherein said micro fuel cell (1) and said microreactor (2) are realised by using micro-worked silicon plates (6, 11, 12) **characterised in that** said micro fuel cell (1) and said microreactor (2) have identical dimensions and are connected to each other by means of wafer bonding technique so as that the microreactor (2) is integrated with the micro fuel cell (1), said microreactor (2) being supplied with a fuel aqueous solution of Sodium Borohydride at environment temperature and pressure.

2. Integrated system for the production of energy according to claim 1, **characterised in that** it further comprises a first tank (3) for storing said fuel aqueous solution of Sodium Borohydride and a second tank (4) for storing reaction by-products and **in that** said microreactor (2) comprises:
- a silicon plate (6) wherein a reaction chamber (7a) is realised comprising at least one microchannel (7) of predetermined length, in fluid communication, in correspondence with opposite ends thereof, with said first and respectively said second tank (3, 4); and
- a semipermeable membrane (5) associated on said microchannel (7), for its whole length, for completely covering it.

3. Integrated system for the production of energy according to claim 2, **characterised in that** said micro fuel cell (1) comprises a first silicon plate (11) which realises an anode thereof (A) and a second silicon plate (12) which realises a cathode thereof (C) overlapped onto each other and separated by a proton exchange polymeric membrane (13).

4. Integrated system for the production of energy according to claim 3, **characterised in that** said micro-worked silicon plates (6, 11, 12) comprise through holes allowing the passage of the hydrogen produced by said microreactor (2) to said anode (A) of said micro fuel cell (1) and of the air to said cathode (C) of the same.

5. Integrated system for the production of energy according to claim 2, **characterised in that** said microchannel (7) is essentially serpentine-wise extended in said plate (6) forming said microreactor (2).

6. Integrated system for the production of energy according to claim 5, **characterised in that** said microchannel (7) is micro-worked.

7. Integrated system for the production of energy according to claim 3, **characterised in that** a catalyst constituted by at least one metal chosen among Cobalt, Nickel, Platinum and Ruthenium is placed between said polymeric proton exchange membrane (13).

8. Integrated system for the production of energy according to claim 2, **characterised in that** a catalytic bed is defined in said reaction chamber (7a), said catalytic bed being constituted by at least one metal chosen among Cobalt, Nickel, Platinum and Ruthenium.

9. Integrated system for the production of energy according to claim 5, **characterised in that** said catalytic bed is constituted by Ruthenium, deposited on the bottom of said microchannel (7) for at least part of the predetermined length thereof.

10. Integrated system for the production of energy according to claim 1, **characterised in that** said membrane (5) is made integral with said micro-worked plate (6) realising said microreactor (1) thanks to the use of an adhesive layer.

11. Integrated system for the production of energy according to claim 2, **characterised in that** said first and respectively said second tank (3, 4) are interchangeable like a cartridge and provided with suitable mechanical valves which are automatically opened thanks to the pressure exerted in case of installation of said tanks (3, 4) on a support platform of said system.

12. Integrated system for the production of energy according to claim 2, **characterised in that** said microchannel (7) is protected with an oxide layer whereon a layer of said catalyst is deposited.

13. Process for the production of energy of the type using a micro fuel cell (1) and a microreactor (2) for the production of gaseous hydrogen to be supplied to said micro fuel cell (1) comprising the steps of:
- continuously supplying a fuel solution to a reaction chamber realised in said microreactor (2) with obtainment of hydrogen
- continuously recovering the hydrogen thus obtained
- supplying said hydrogen as it is obtained to a micro fuel cell (1); and
- transforming said hydrogen into electric energy through said micro fuel cell (1);
**characterised in that** said step of continuously supplying a fuel solution comprises the step of supplying a fuel aqueous solution of Sodium Borohydride at environment temperature and pressure;
and **in that** said micro fuel cell (1) and said microreactor (2) being realised by using micro-worked silicon plates (6, 11, 12) having identical dimensions and being connected to each other by means of wafer bonding technique so as that the microreactor (2) is integrated with the micro fuel cell (1).

14. Process according to claim 13, **characterised in that** said microreactor (2) generates hydrogen, which, through a semipermeable membrane (5) associated with said reaction chamber (7a) of said microreactor (2), reaches an anode (A) of said micro fuel cell (1) and wherein said hydrogen, passing through holes of a silicon plate (11) which realises said anode (A), meets a polymeric proton exchange membrane (13) comprised in said micro fuel cell (1) where it reacts to give electrons and hydrogen ions.

15. Process according to claim 14, **characterised in that** said reaction of said hydrogen occurs thanks to the presence of the catalyst placed on said polymeric proton exchange membrane (13).

16. Process according to claim 14, **characterised in that** said hydrogen ions, transiting through said membrane (5) of said microreactor (2), reach a cathode (C) of said micro fuel cell (1), where, together with the oxygen in the air and acceding to said micro fuel cell (1) through a second silicon plate (12) which realises said cathode (C), react to form water and generating heat, while the electrons, through an external electric circuit, constitute a current supplied by said micro fuel cell (1).

17. Process according to claim 16, **characterised in that** said electrons complete the reaction at said cathode (C) where, rejoining the hydrogen ions, reconstitute the hydrogen atoms, before these react with the oxygen in the air to form water.

18. Process according to claim 13, **characterised in that** said step of continuously supplying said fuel aqueous solution of Sodium Borohydride comprises a step of continuously supplying said solution to a catalytic bed constituted by at least one metal chosen among Cobalt, Nickel, Platinum, Ruthenium with obtainment of hydrogen and of a by-product comprising sodium metaborate.

19. Process according to claim 18, **characterised in that** said catalytic bed is formed by ruthenium in the pulverulent form, finely dispersed.

20. Process according to claim 18, **characterised in that** said fuel aqueous solution of Sodium Borohydride is buffered at a pH comprised between 13 and 14, preferably at pH 14, through an aqueous solution of sodium hydroxide, at 4% by weight.

21. Process according to claim 19, **characterised in that** said catalytic bed is formed by ruthenium in the pulverulent form, finely dispersed with PVD (Phase Vapour Deposition) techniques or through sputtering

## Patentansprüche

1. Integriertes System zur Energieerzeugung von dem Typ, der mindestens eine Mikro-Brennstoffzelle (1) und einen Mikroreaktor (2) zur Erzeugung von gasförmigem, der Mikro-Brennstoffzelle (1) zuzuführendem Wasserstoff aufweist, wobei die Mikro-Brennstoffzelle (1) und der Mikroreaktor (2) durch Verwendung von mikrobearbeiteten Siliciumplatten (6, 11, 12) realisiert sind, **dadurch gekennzeichnet, dass** die Mikro-Brennstoffzelle (1) und der Mikroreaktor (2) identische Abmessungen haben und mittels Wafer-Verbindungstechnik miteinander verbunden sind, so dass der Mikroreaktor (2) mit der Mikro-Brennstoffzelle (1) zusammengefügt ist, wobei der Mikroreaktor (2) mit einer wässrigen Betriebsstofflösung von Natriumborhydrid bei Umgebungstemperatur und Umgebungsdruck gespeist wird.

2. Integriertes System zur Energieerzeugung nach Anspruch (1), **dadurch gekennzeichnet, dass** es ausserdem einen ersten Behälter (3) zum Aufbewahren der wässrigen Betriebsstofflösung von Natriumborhydrid und einen zweiten Behälter (4) zum Aufbewahren von Reaktions-Nebenprodukten aufweist, und **dadurch**, dass der Mikroreaktor (2) aufweist:
- eine Siliciumplatte (6), in der ein Reaktionsraum (7a) realisiert ist, der mindestens einen Mikrokanal (7) von vorbestimmter Länge aufweist, der mit dem ersten bzw. dem zweiten Behälter (3, 4), seinen entgegengesetzten Enden entsprechend, in Fluidverbindung ist; und
- eine semipermeable Membran (5), die auf dem Mikrokanal (7) angefügt ist, über seine ganze Länge, um ihn vollständig zu bedecken.

3. Integriertes System zur Energieerzeugung nach Anspruch 2, **dadurch gekennzeichnet, dass** die Mikro-Brennstoffzelle (1) eine erste Siliciumplatte (11), die eine Anode davon (A) realisiert, und eine zweite Siliciumplatte (12), die eine Kathode davon (C) realisiert, die sich überlappend aufeinander befinden und von einer Protontenaustauscher-Polymermembran (13) getrennt werden, aufweist.

4. Integriertes System zur Energieerzeugung nach Anspruch 3, **dadurch gekennzeichnet, dass** die mikrobearbeiteten Siliciumplatten (6, 11, 12) durchgehende Öffnungen aufweise, die den Durchtritt des von dem Mikroreaktor (2) erzeugten Wasserstoffs zu der Anode (A) der Mikro-Brennstoffzelle (1), und der Luft zu der Kathode (C) derselben erlauben.

5. Integriertes System zur Energieerzeugung nach Anspruch 2, **dadurch gekennzeichnet, dass** der Mikrokanal (7) sich in der Platte (6), die den Mikroreaktor (2) bildet, im Wesentlichen serpentinenartig erstreckt.

6. Integriertes System zur Energieerzeugung nach Anspruch 5, **dadurch gekennzeichnet, dass** der Mikrokanal (7) mikrogearbeitet ist.

7. Integriertes System zur Energieerzeugung nach Anspruch 3, **dadurch gekennzeichnet, dass** ein Katalysator, der von mindestens einem Metall, das unter Kobalt, Nickel, Platin und Ruthenium ausgewählt ist, gebildet wird, zwischen der polymeren Protonenaustauschermembran (13) angebracht ist.

8. Integriertes System zur Energieerzeugung nach Anspruch 2, **dadurch gekennzeichnet, dass** in dem Reaktionsraum (7a) ein katalytisches Bett definiert ist, wobei das katalytische Bett von mindestens einem Metall gebildet wird, das unter Kobalt, Nickel, Platin und Ruthenium ausgewählt ist.

9. Integriertes System zur Energieerzeugung nach Anspruch 5, **dadurch gekennzeichnet, dass** das katalytische Bett von Ruthenium, das am Boden des Mikrokanals (7) über mindestens einen Teil seiner vorbestimmten Länge abgeschieden ist, gebildet wird.

10. Integriertes System zur Energieerzeugung nach Anspruch 1, **dadurch gekennzeichnet, dass** die Membran (5) dank der Verwendung einer Klebstoffschicht mit der mikrobearbeiteten Platte (6) zu einer Einheit verbunden ist, wodurch der Mikroreaktor (1) realisiert wird.

11. Integriertes System zur Energieerzeugung nach Anspruch 2, **dadurch gekennzeichnet, dass** der erste bzw. der zweite Behälter (3, 4) wie eine Patrone austauschbar und mit geeigneten mechanischen Ventilen ausgestattet sind, die dank des Drucks, der im Fall eines Anschlusses der Behälter (3, 4) an eine Trägerplattform des Systems ausgeübt wird, automatisch geöffnet werden.

12. Integriertes System zur Energieerzeugung nach Anspruch 2, **dadurch gekennzeichnet, dass** der Mikrokanal (7) mit einer Oxidschicht geschützt ist, auf der eine Schicht des Katalysators abgeschieden ist.

13. Verfahren zur Energieerzeugung von dem Typ, der eine Mikro-Brennstoffzelle (1) und einen Mikroreaktor (2) zur Erzeugung von gasförmigem, der Mikro-Brennstoffzelle (1) zuzuführendem Wasserstoff verwendet, folgende Schritte aufweisend:
- kontinuierlich Zuführen einer Betriebsstofflösung zu einem Reaktionsraum, der in dem Mikroreaktor (2) realisiert ist, unter Erhaltung von Wasserstoff
- kontinuierlich Fördern des so erhaltenen Wasserstoffs
- Zuführen des Wasserstoffs, wie er erhalten wird, zu einer Mikro-Brennstoffzelle (1); und
- Umwandeln des Wasserstoffs in elektrische Energie durch die Mikro-Brennstoffzelle (1);
**dadurch gekennzeichnet, dass** der Schritt des kontinuierlich Zuführens einer Betriebsstofflösung den Schritt des Zuführens einer wässrigen Betriebsstofflösung von Natriumborhydrid bei Umgebungstemperatur und Umgebungsdruck aufweist;
und **dadurch**, dass die Mikro-Brennstoffzelle (1) und der Mikroreaktor (2) realisiert werden unter Verwendung von mikrobearbeiteteten Siliciumplatten (6, 11, 12), die identische Abmessungen haben und mittels Wafer-Verbindungstechnik so miteinander verbunden werden, dass der Mikroreaktor (2) mit der Mikro-Brennstoffzelle (1) zusammengefügt wird.

14. Verfahren nach Anspruch 13, **dadurch gekennzeichnet, dass** der Mikroreaktor (2) Wasserstoff erzeugt, der durch eine semi-permeable Membran (5), die an den Reaktionsraum (7a) des Mikroreaktors (2) angefügt ist, eine Anode (A) der Mikro-Brennstoffzelle (1) erreicht, und wobei der Wasserstoff, der durch Öffnungen einer Siliciumplatte (11), die die Anode (A) realisiert, hindurchgeht, auf eine polymere Protonenaustauschermembran (13) trifft, die sich in der Mikro-Brennstoffzelle (1) befindet, wo er reagiert, um Elektronen und Wasserstoffionen zu ergeben.

15. Verfahren nach Anspruch 14, **dadurch gekennzeichnet, dass** die Reaktion des Wasserstoffs dank des Vorliegens des Katalysators, der auf der polymeren Protonenaustauschermembran (13) angebracht ist, stattfindet.

16. Verfahren nach Anspruch 14, **dadurch gekennzeichnet, dass** die Wasserstoffionen, die durch die Membran (5) des Mikroreaktors (2) hindurch treten, eine Kathode (C) der Mikro-Brennstoffzelle (1) erreichen, wo sie zusammen mit dem Sauerstoff, der in der Luft ist und durch eine zweite Siliciumplatte (12), die die Kathode (C) realisiert, in die Mikro-Brennstoffzelle (1) gelangt, unter Bildung von Wasser und Erzeugung von Wärme regieren, während die Elektronen, durch einen externen elektrischen Kreis, einen Strom darstellen, der von der Mikro-Brennstoffzelle (1) geliefert wird.

17. Verfahren nach Anspruch 16, **dadurch gekennzeichnet, dass** die Elektronen die Reaktion an der Kathode (C) vervollständigen, wo sie unter Wiedervereinigung mit den Wasserstoffionen die Wasserstoffatome wiederherstellen, bevor diese mit dem Sauerstoff in der Luft unter Bildung von Wasser reagieren.

18. Verfahren nach Anspruch 13, **dadurch gekennzeichnet, dass** der Schritt des kontinuierlich Zuführens der wässrigen Betriebsstofflösung von Natriumborhydrid einen Schritt des kontinuierlich Zuführens der Lösung zu einem katalytischen Bett, das von mindestens einem Metall gebildet wird, das unter Kobalt, Nickel, Platin, Ruthenium ausgewählt wird, unter Erhaltung von Wasserstoff und eines Natriummetaborats aufweisenden Nebenprodukts, aufweist.

19. Verfahren nach Anspruch 18, **dadurch gekennzeichnet, dass** das katalytische Bett von Ruthenium in der pulverförmigen Form, fein verteilt, gebildet wird.

20. Verfahren nach Anspruch 8, **dadurch gekennzeichnet, dass** die wässrige Betriebsstofflösung von Natriumborhydrid durch eine wässrige Lösung von Natriumhydroxid, 4-Gewichts-%, bei einem pH, der sich zwischen 13 und 14 befindet, bevorzugt bei pH 14, gepuffert wird.

21. Verfahren nach Anspruch 19, **dadurch gekennzeichnet, dass** das katalytische Bett von Ruthenium in der pulverförmigen Form, mittels PVD (Phase Vapour Deposition, Abscheidung in der Dampfphase)-Techniken oder durch Sputtern fein verteilt, gebildet wird.

## Revendications

1. Système intégré pour la production d'énergie du type comprenant au moins une micro-pile à combustible (1) et un microréacteur (2) pour la production de gaz hydrogène à fournir à la micro-pile à combustible (1), la micro-pile à combustible (1) et le microréacteur (2) étant réalisés en utilisant des plaques de silicium micro-usinées (6, 11, 12), **caractérisé en ce que** la micro-pile à combustible (1) et le microréacteur (2) ont des dimensions identiques et sont connectés entre eux au moyen d'une technique de liaison de tranche de sorte que le microréacteur (2) est intégré avec la micro-pile à combustible (1), le microréacteur (2) étant alimenté par une solution aqueuse de carburant de borohydrure de sodium à la température et la pression ambiantes.

2. Système intégré pour la production d'énergie selon la revendication 1, **caractérisé en ce qu'**il comprend en outre un premier réservoir (3) pour stocker la solution aqueuse de carburant de borohydrure de sodium et un deuxième réservoir (4) pour stocker des sous-produits de réaction, et **en ce que** le microréacteur (2) comprend :
une plaque de silicium (6) dans laquelle est réalisée une chambre de réaction (7a) comprenant au moins un micro-canal (7) d'une longueur prédéterminée, en communication de fluide, en correspondance avec des extrémités opposées de celui-ci, avec le premier et respectivement le deuxième réservoirs (3, 4) ; et
une membrane semi-perméable (5) associée sur le micro-canal (7), sur toute sa longueur, pour le recouvrir complètement.

3. Système intégré pour la production d'énergie selon la revendication 2, **caractérisé en ce que** la micro-pile à combustible (1) comprend une première plaque de silicium (11) qui réalise une anode (A) de celle-ci et une deuxième plaque de silicium (12) qui réalise une cathode (C) de celle-ci, superposées entre elles et séparées par une membrane polymère d'échange de protons (13).

4. Système intégré pour la production d'énergie selon la revendication 3, **caractérisé en ce que** les plaques de silicium micro-usinées (6, 11, 12) comprennent des trous à travers permettant le passage de l'hydrogène produit par le microréacteur (2) vers l'anode (A) de la micro-pile à combustible (1) et de l'air vers sa cathode (C).

5. Système intégré pour la production d'énergie selon la revendication 2, **caractérisé en ce que** le micro-canal (7) est principalement en forme de serpentin s'étendant dans la plaque (6) formant le microréacteur (2).

6. Système intégré pour la production d'énergie selon la revendication 5, **caractérisé en ce que** le micro-canal (7) est micro-usiné.

7. Système intégré pour la production d'énergie selon la revendication 3, **caractérisé en ce qu'**un catalyseur constitué d'au moins un métal choisi parmi le cobalt, le nickel, le platine et le ruthénium est placé sur la membrane polymère d'échange de protons (13).

8. Système intégré pour la production d'énergie selon la revendication 2, **caractérisé en ce qu'**un lit catalytique est défini dans la chambre de réaction (7a), ledit lit catalytique étant constitué d'au moins un métal choisi parmi le cobalt, le nickel, le platine et le ruthénium.

9. Système intégré pour la production d'énergie selon la revendication 5, **caractérisé en ce que** le lit catalytique est constitué de ruthénium, déposé dans le fond du micro-canal (7) sur au moins une partie de sa longueur prédéterminée.

10. Système intégré pour la production d'énergie selon la revendication 1, **caractérisé en ce que** la membrane (5) est faite d'une seule pièce avec la plaque micro-usinée (6) réalisant le microréacteur (1) grâce à l'utilisation d'une couche adhésive.

11. Système intégré pour la production d'énergie selon la revendication 2, **caractérisé en ce que** les premier et respectivement deuxième réservoirs (3, 4) sont interchangeables comme une cartouche et sont munis de soupapes mécaniques appropriées qui sont ouvertes automatiquement grâce à la pression exercée dans le cas où on installe lesdits réservoirs (3, 4) sur une plateforme support du système.

12. Système intégré pour la production d'énergie selon la revendication 2, **caractérisé en ce que** le micro-canal (7) est protégé par une couche d'oxyde sur laquelle est déposée une couche dudit catalyseur.

13. Processus pour la production d'énergie du type utilisant une micro-pile à combustible (1) et un microréacteur (2) pour la production de gaz hydrogène à fournir à la micro-pile à combustible (1), comprenant les étapes suivantes :
fournir en continu une solution de carburant à une chambre de réaction réalisée dans le microréacteur (2) avec obtention d'hydrogène ;
récupérer en continu l'hydrogène ainsi obtenu ;
fournir l'hydrogène tel qu'il est obtenu à une micro-pile à combustible (1) ; et
transformer l'hydrogène en énergie électrique par l'intermédiaire de la micro-pile à combustible (1) ;
**caractérisé en ce que** l'étape consistant à fournir en continu une solution de carburant comprend une étape de fourniture d'une solution aqueuse de carburant de borohydrure de sodium à la température et la pression ambiantes ;
et **en ce que** la micro-pile à combustible (1) et le microréacteur (2) sont réalisés en utilisant des plaques de silicium micro-usinées (6, 11, 12) ayant des dimensions identiques et connectées entre elles au moyen d'une technique de liaison de tranche de telle sorte que le microréacteur (2) est intégré avec la micro-pile à combustible (1).

14. Procédé selon la revendication 13, **caractérisé en ce que** le microréacteur (2) génère de l'hydrogène qui, par l'intermédiaire d'une membrane semi-perméable (5) associée à la chambre de réaction (7a) du microréacteur (2), atteint une anode (A) de la micro-pile à combustible (1) et dans lequel l'hydrogène, passant par les trous d'une plaque de silicium (11) qui réalise l'anode (A), rencontre une membrane polymère d'échange de protons (13) inclue dans la micro-pile à combustible (1) sur laquelle elle réagit pour donner des électrons et des ions hydrogène.

15. Procédé selon la revendication 14, **caractérisé en ce que** ladite réaction d'hydrogène se produit grâce à la présence du catalyseur placé sur la membrane polymère d'échange de protons (13).

16. Procédé selon la revendication 14, **caractérisé en ce que** les ions hydrogène, transitant à travers la membrane (5) du microréacteur (2), atteignent une cathode (C) de la micro-pile à combustible (1), où, avec l'oxygène de l'air et en accédant à la micro-pile à combustible (1) à travers une deuxième plaque de silicium (12) qui réalise la cathode (C), réagissent pour former de l'eau et générer de la chaleur, tandis que les électrons, par un circuit électrique externe, constituent un courant fourni par la micro-pile à combustible (1).

17. Procédé selon la revendication 16, **caractérisé en ce que** les électrons achèvent la réaction au niveau de la cathode (C) où, en rejoignant les ions hydrogène, ils reconstituent les atomes d'hydrogène, avant que ceux-ci réagissent avec l'oxygène de l'air pour former de l'eau.

18. Procédé selon la revendication 13, **caractérisé en ce que** l'étape consistant à fournir en continu la solution aqueuse de carburant de borohydrure de sodium comprend une étape consistant à fournir en continu la solution à un lit catalytique constitué d'au moins un métal choisi parmi le cobalt, le nickel, le platine, le ruthénium avec obtention d'hydrogène et d'un sous-produit comprenant du métaborate de sodium.

19. Procédé selon la revendication 18, **caractérisé en ce que** le lit catalytique est formé par du ruthénium sous forme pulvérulente, finement dispersé.

20. Procédé selon la revendication 18, **caractérisé en ce que** la solution aqueuse de carburant de borohydrure de sodium est tamponnée à un pH compris entre 13 et 14, de préférence à pH 14, par l'intermédiaire d'une solution aqueuse d'hydroxyde de sodium, à 4 % en poids.

21. Procédé selon la revendication 19, **caractérisé en ce que** le lit catalytique est formé de ruthénium sous forme pulvérulente, finement dispersé à l'aide de techniques PVD (Dépôt en Phase Vapeur) ou par pulvérisation.
